(19) Europäisches Patentamt
European Patent Office
Office européen des brevets

(11) **EP 3 968 233 A1**

(12) **EUROPEAN PATENT APPLICATION**

(43) Date of publication:
**16.03.2022 Bulletin 2022/11**

(21) Application number: **20195341.1**

(22) Date of filing: **09.09.2020**

(51) International Patent Classification (IPC):
**G06N 3/04** (2006.01)         **G06N 3/08** (2006.01)
**G06K 9/00** (2022.01)

(52) Cooperative Patent Classification (CPC):
**G06N 3/0454; G06N 3/084; G06V 20/597**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Valeo Comfort and Driving Assistance 94046 Créteil Cedex (FR)**

(72) Inventors:
• **QUESSADA, Audrey**
  **94046 Créteil CEDEX (FR)**
• **BUCHERT, Louis**
  **94046 Créteil CEDEX (FR)**

(74) Representative: **Delplanque, Arnaud Valeo Comfort and Driving Assistance 6 rue Daniel Costantini 94000 Créteil (FR)**

(54) **A COMPUTER IMPLEMENTED METHOD FOR TRAINING A GAN NETWORK TO GENERATE ARTIFICIAL IMAGES OF FACES FOR A DRIVER MONITORING SYSTEM**

(57) The invention relates to a computer implemented method for training a GAN network to generate artificial images of faces for a DMS system, said computer implemented method comprising:
- configuring a generator of said GAN network to receive an input vector composed of a latent vector and of a labels vector, said labels vector comprising labels extracted from a dataset comprising a primary number of real images of faces of a secondary number of persons,
- configuring said generator to generate artificial images of faces, at different scales on each primary convolution layer of which said generator is composed of, based on said input vector,
- configuring a discriminator of said GAN network to receive for each secondary convolution layers of which said discriminator is composed of, as inputs an artificial image of a face at a different scale from another secondary convolution layer, and a real image of a face at the same scale, said real image of a face coming from said dataset,
- configuring said discriminator to receive said labels vector as an input on an additional secondary convolution layer,
- configuring said discriminator to output a loss function,
- adjusting weights of said primary convolution layers and weights of said secondary convolution layers based on said loss function using back propagation until a convergence of the generative adversarial network is reached,
- applying a metric(s) on said artificial images of faces,
- adjusting training parameters to reach a minimum value of the metric(s).

**Description**

The present invention relates to a computer implemented method for training a generative adversarial network to generate artificial images of faces for a driver monitoring system.

A driver monitoring system is a vehicle safety system aiming to detect and prevent drowsiness and distraction of the driver. It prevents accidents and thus enhances the safety of the driver.

The driver monitoring system uses a NIR (Near Infra-red) camera to acquire images of the driver face. The camera is coupled with a central processing unit which detects signs of drowsiness and distraction of the driver based on extracted features of said images of the driver face. The extracted features may be the head pose.

In order to train the driver monitoring system to detect signs of drowsiness and distraction of the driver, some machine learning model are used based on a database which includes multiple samples where real driving situations scenarios are recorded in which a driver is distracted or drowsy. These scenarios are annotated (driver distracted or not, drowsy or not) and labeled (classification by level of distraction, falling asleep) by an expert. More than a thousand of real persons are needed in different states (distraction states, drowsiness states), and from 20 000 to 1000 000 of real images of these thousand persons are needed.

One problem of this prior art is that the database used for the machine learning doesn't include enough samples for the training of the driver monitoring system to be efficient. Such a database is indeed difficult to set up due to human resources (calling an expert, putting person in situ for distraction and drowsiness while driving) which must be called upon.

It is an object of the invention to provide a computer implemented method for training a generative adversarial network to generate artificial images of faces for a driver monitoring system, which resolves the problem above-stated.

To this end, it is provided a computer implemented method for training a generative adversarial network to generate artificial images of faces for a driver monitoring system, said computer implemented method comprising:

- configuring a generator of said generative adversarial network to receive an input vector composed of a latent vector and of a labels vector, said labels vector comprising labels extracted from a dataset comprising a primary number of real images of faces of a secondary number of persons,
- configuring said generator to generate artificial images of faces for a driver monitoring system, at different scales on each primary layer of which said generator is composed of, based on said input vector,
- configuring a discriminator of said generative adversarial network to receive for each secondary layers of which said discriminator is composed of, as inputs an artificial image of a face generated by said generator at a different scale from another secondary layer, and a real image of a face at the same scale, said real image of a face coming from said dataset,
- configuring said discriminator to receive said labels vector as an input on an additional secondary layer,
- configuring said discriminator to output a loss function,
- adjusting weights of said primary layers and weights of said secondary layers based on said loss function using back propagation until a convergence of the generative adversarial network is reached,
- applying at least one metric on said artificial images of faces,
- adjusting training parameters to reach a minimum value of the at least one metric.

In particular, in a non-limitative embodiment, the artificial images of faces will be used for the training of the driver monitoring system. Hence, the artificial images of faces are also called training artificial images of faces. Hence, one generates training artificial images of faces for a driver monitoring system by means of a generative adversarial network.

In other words, it is provided a computer implemented method for training a generative adversarial network to generate artificial images of faces for a driver monitoring system, said computer implemented method comprising:

- applying to a generator of said generative adversarial network an input vector composed of a latent vector and of a labels vector, said labels vector comprising labels extracted from a dataset comprising a primary number of real images of faces of a secondary number of persons,
- generate by means of said generator artificial images of faces for a driver monitoring system, at different scales on each primary layer of which said generator is composed of, based on said input vector,
- applying to a discriminator of said generative adversarial network for each secondary layers of which said discriminator is composed of, as inputs an artificial image of a face generated by said generator at a different scale from another secondary layer, and a real image of a face at the same scale, said real image of a face coming from said dataset,
- applying as an input said labels vector on an additional secondary layer of said discriminator,
- output a loss function by means of said discriminator,
- adjusting weights of said primary layers and weights of said secondary layers based on said loss function using back propagation until a convergence of the generative adversarial network is reached,
- applying at least one metric on said artificial images of faces,
- adjusting training parameters to reach a minimum value of the at least one metric.

As we will see in further details, the computer implemented method allows the generation of artificial images of faces of persons, that is to say images of faces of non-real persons (also referred to as fake persons) who don't exist in reality. These artificial images are generated under conditions, which are the labels, such as head pose. These artificial images replace the database of samples of real persons who are in distraction states or drowsiness states. Hence, these artificial images will be used to train the driver monitoring system. Hence, it reduces the complex creation of the database which is used for the training of the driver monitoring system and its cost. Hence, the computer implemented method allows the generation of training artificial images of faces of persons for a driver monitoring system. Moreover, the artificial images which are generated are realistic. Hence, they can be used as training data for a driver monitoring system.

Moreover, thanks to the labels which are applied as inputs on the generator and at the same time on the discriminator of the GAN network, the artificial images which are generated have similar head pose than the real image from which they have been generated. They verify the same conditions set up on the real image, that is to say the same labels. It avoids having an artificial image which is generated with a head pose, and which is totally different from the head pose of the real image from which it has been generated. Hence, it avoids having errors in the training of the driver monitoring system and it avoids having a non-reliable driver monitoring system. Moreover, the computer implemented method trains the generative adversarial network GAN to generate high-scaled conditioned artificial images: it allows using multiple labels for the conditioning and the artificial images that are generated are realistic. Hence, the artificial images reproduce in particular some distraction states or drowsiness states of a plurality of persons and can be used as inputs for the training of a driver monitoring system.

According to non-limitative embodiments of the invention, the computer implemented method in accordance with the invention further comprises the following characteristics.

In a non-limitative embodiment, said artificial images of faces which are generated by the generator, reproduce some distraction states and drowsiness states of a plurality of persons with respect to the labels vector.

In a non-limitative embodiment, said primary layers and said secondary layers are convolution layers.

In a non-limitative embodiment, the configuration of said generator comprises the configuration of a unique primary layer to receive said input vector.

In a non-limitative embodiment, the artificial images of a face and the real image of a face, which are received as inputs by said discriminator are concatenated for each secondary layer apart from an additional secondary layer. The artificial images of a face and the real image of a face are concatenated at different scales.

In a non-limitative embodiment, the secondary number of persons is less than 40.

In a non-limitative embodiment, the primary number of real images of faces is at least equal to 20 000.

In a non-limitative embodiment, the different scales are a multiple of ½.

In a non-limitative embodiment, said labels vector comprise one or a plurality of classification conditions and/or one or a plurality of regression conditions.

In a non-limitative embodiment, said labels vector comprises two classification conditions and one regression condition.

In a non-limitative embodiment, the classification conditions are the gender, accessories wearing.

In a non-limitative embodiment, the regression conditions are the angles of the head pose.

In a non-limitative embodiment, the loss function is a relativistic average loss function.

In a non-limitative embodiment, the at least one metric is a Frechet Inception Distance, or an Inception Score, or an Euclidian distance.

In a non-limitative embodiment, the number of primary layers within said generator is equal to the number of secondary layers within said discriminator.

In a non-limitative embodiment, said training parameters comprise:

- hyperparameters,
- a distribution of the real images within said dataset,
- parameters related to the architecture of the generative adversarial network.

In a non-limitative embodiment, the labels of the labels vector are chosen among real labels related to the real images of said dataset.

In a non-limitative embodiment, the input vector comprises a size of 512.

In a non-limitative embodiment, the number of primary layers within said generator is equal to 3.

In a non-limitative embodiment, the number of primary layers within said discriminator is equal to 3.

In a non-limitative embodiment, the standard deviations are of 15+° for the yaw angle, of 11° for the pitch and of 10° for the roll.

In a non-limitative embodiment, the dataset comprises at least 500 real images per person. In a non-limitative variant of embodiment, the dataset comprises 1000 real images per person.

There is also provided a data processing apparatus comprising at least one processor configured to perform the computer implemented method according to any one of the preceding characteristics.

There is also provided a computer program product, comprising instructions, which when the computer program product is executed by a computer, causes the computer to carry out the computer implemented method according to any one of the preceding characteristics.

There is also provided a non-transitory computer readable storage medium comprising instructions, which when executed by a computer, causes the computer to carry out the computer implemented method according to any one of the preceding characteristics.

Hence, the data processing apparatus for training a generative adversarial network to generate artificial images of faces for a driver monitoring system, comprises:

- at least one non-transitory computer readable storage medium,
- instructions stored on the at least one non-transitory computer readable storage medium,
- at least one processor configured to execute said instructions to perform operations comprising:
- configuring a generator of said generative adversarial network to receive an input vector composed of a latent vector and of a labels vector, said labels vector comprising labels extracted from a dataset comprising a primary number of real images of faces of a secondary number of persons,
- configuring said generator to generate artificial images of faces for a driver monitoring system, at different scales on each primary layer of which said generator is composed of, based on said input vector,
- configuring a discriminator of said generative adversarial network to receive for each secondary layers of which said discriminator is composed of, as inputs an artificial image of a face generated by said generator at a different scale from another secondary layer, and a real image of a face at the same scale, said real image of a face coming from said dataset,
- configuring said discriminator to receive said labels vector as an input on an additional secondary layer,
- configuring said discriminator to output a loss function,
- adjusting weights of said primary layers and weights of said secondary layers based on said loss function using back propagation until a convergence of the generative adversarial network is reached,
- applying at least one metric on said artificial images of faces,
- adjusting training parameters to reach a minimum value of the at least one metric.

Hence, the non-transitory computer readable storage medium comprises instructions for training a generative adversarial network to generate artificial images of faces for a driver monitoring system, that when executed by at least one processor, causes the at least one processor to allow:

- configuring a generator of said generative adversarial network to receive an input vector composed of a latent vector and of a labels vector, said labels vector comprising labels extracted from a dataset comprising a primary number of real images of faces of a secondary number of persons,
- configuring said generator to generate artificial images of faces for a driver monitoring system, at different scales on each primary layer of which said generator is composed of, based on said input vector,
- configuring a discriminator of said generative adversarial network to receive for each secondary layers of which said discriminator is composed of, as inputs an artificial image of a face generated by said generator at a different scale from another secondary layer, and a real image of a face at the same scale, said real image of a face coming from said dataset,
- configuring said discriminator to receive said labels vector as an input on an additional secondary layer,
- configuring said discriminator to output a loss function,
- adjusting weights of said primary layers and weights of said secondary layers based on said loss function using back propagation until a convergence of the generative adversarial network is reached,
- applying at least one metric on said artificial images of faces,
- adjusting training parameters to reach a minimum value of the at least one metric.

Hence, the computer program product, comprises program instructions stored in a non-transitory computer readable storage medium, the program instructions executable by a computer to cause the computer to perform the computer implemented method for training a generative adversarial network to generate artificial images of faces for a driver monitoring system, comprising:

- configuring a generator of said generative adversarial network to receive an input vector composed of a latent vector and of a labels vector, said labels vector comprising labels extracted from a dataset comprising a primary number of real images of faces of a secondary number of persons,
- configuring said generator to generate artificial images of faces for a driver monitoring system, at different scales on each primary layer of which said generator is composed of, based on said input vector,
- configuring a discriminator of said generative adversarial network to receive for each secondary layers of which said discriminator is composed of, as inputs an artificial image of a face generated by said generator at a different scale from another secondary layer, and a real image of a face at the same scale, said real image of a face coming from said dataset,
- configuring said discriminator to receive said labels vector as an input on an additional secondary layer,
- configuring said discriminator to output a loss function,
- adjusting weights of said primary layers and weights of said secondary layers based on said loss function using back propagation until a convergence of the generative adversarial network is reached,
- applying at least one metric on said artificial images of faces,
- adjusting training parameters to reach a minimum value of the at least one metric.

The data processing apparatus that trains the generative adversarial network implements said generative adversarial network.

Hence, the data processing apparatus for implementing a generative adversarial network to generate artificial images of faces for a driver monitoring system, comprises:

- at least one non-transitory computer readable storage medium,
- instructions stored on the at least one non-transitory computer readable storage medium,
- at least one processor configured to execute said instructions to perform operations comprising:

- configuring a generator of said generative adversarial network to receive an input vector composed of a latent vector and of a labels vector, said labels vector comprising labels extracted from a dataset comprising a primary number of real images of faces of a secondary number of persons,
- configuring said generator to generate artificial images of faces for a driver monitoring system, at different scales on each primary layer of which said generator is composed of, based on said input vector,
- configuring a discriminator of said generative adversarial network to receive for each secondary layers of which said discriminator is composed of, as inputs an artificial image of a face generated by said generator at a different scale from another secondary layer, and a real image of a face at the same scale, said real image of a face coming from said dataset,
- configuring said discriminator to receive said labels vector as an input on an additional secondary layer,
- configuring said discriminator to output a loss function.

Some embodiments of methods and/or apparatus in accordance with embodiments of the present invention are now described, by way of example only, and with reference to the accompanying drawings, in which:

[Fig. 1] is a schematic diagram which illustrates a computer implemented method for training a generative adversarial network to generate artificial images of faces for a driver monitoring system, according to a non-limitative embodiment of the invention,

[Fig. 2] is a schematic diagram which illustrates the computer implemented method of figure 1, said computer implemented method further comprising a storing step, according to a non-limitative embodiment,

[Fig. 3] is a schematic diagram of the generative adversarial network which is trained by the computer implemented method of figure 1, said generative adversarial network comprising a generator and a discriminator, according to a non-limitative embodiment,

[Fig. 4] illustrates in detail the architecture of the generative adversarial network of figure 3, according to a non-limitative embodiment,

[Fig. 5] is a schematic diagram of a person head with the angles of the head pose, which is a regression condition which is an input parameter of the computer implemented method of figure 1, according to a non-limitative embodiment,

5

[Fig. 6] illustrates three sets of artificial images generated by the computer implemented method of figure 1, according to the yaw angle, pitch angle and roll angle of a head pose and based on a first dataset of real images, according to a non-limitative embodiment,

[Fig. 7] illustrates a real image of a real person and an artificial image of a fake person which is generated by the computer implemented method of figure 1, according to a first head pose and based on a second dataset of real images, according to a non-limitative embodiment,

[Fig. 8] illustrates real images of a real person, and artificial images of a fake person which are generated by the computer implemented method of figure 1, according to different head poses and based on a second dataset of real images, according to the second head position, according to a non-limitative embodiment,

[Fig. 9] illustrates samples of artificial images which have been generated by a generative adversarial network of the prior art,

[Fig. 10] illustrates samples of artificial images which have been generated by a generative adversarial network which has been trained by the computer implemented method of figure 1, according to a non-limitative embodiment,

[Fig. 11] is a schematic diagram of a data processing apparatus comprising at least one processor configured to perform the computer implemented method of figure 1, according to a non-limitative embodiment.

In the following description, well-known functions or constructions by the man skilled in the art are not described in detail since they would obscure the invention in unnecessary detail.

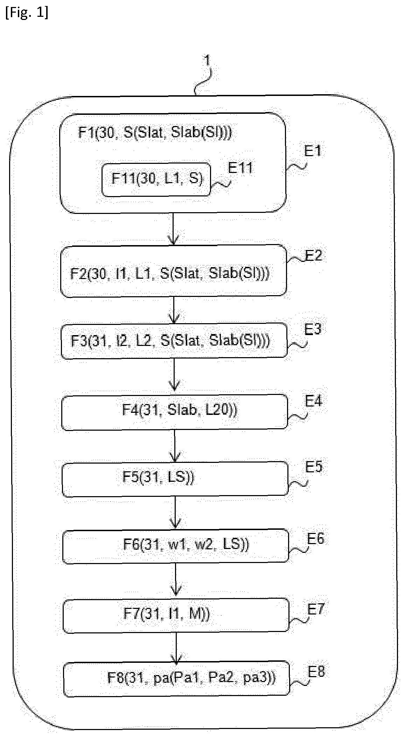

The present invention relates to a computer implemented method 1 for training a generative adversarial network GAN to generate artificial images of faces I1 for a driver monitoring system DMS, said computer implemented method 1 being described in reference to figures 1 to 11, according to non-limitative embodiments.

In the following, the generative adversarial network GAN is also called GAN network. The artificial images of faces I1 will be used for a training for the driver monitoring device DMS. Hence, the artificial images of faces I1 are training data for the driver monitoring device DMS. They are also referred as to training artificial images of faces I1. In the following, the driver monitoring system DMS is also referred to as DMS system.

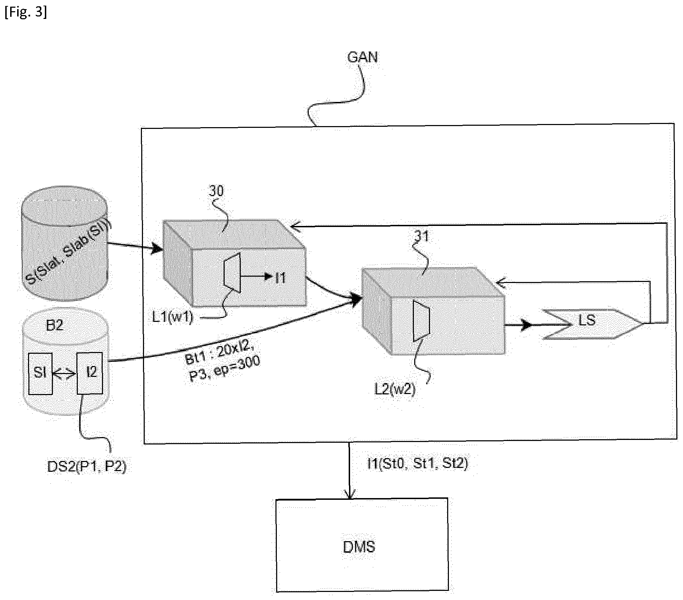

As illustrated in figure 3, the generative adversarial network GAN is a neural network architecture composed of a pair of competing neural networks including a generator 30, and a discriminator 31. Training the generative adversarial network GAN allows:

- the generator 30 to learn how to produce images of faces I1 (also called artificial images, or generated images of faces I1, or generated images I1, or images I1 in the following), that look like real images of faces, and
- the discriminator 31 to learn to distinguish between real images of faces I2 (also called real images I2, or images I2 in the following) and generated images of faces I1.

The generator 30 is composed of a plurality of primary layers L1 with weights w1 and the discriminator 31 is composed of a plurality of secondary layer L2 with weights w2. In a non-limitative embodiment, the primary layers L1 and the secondary layers L2 are convolution layers. This non-limitative embodiment is taken as a non-limitative example in the following.

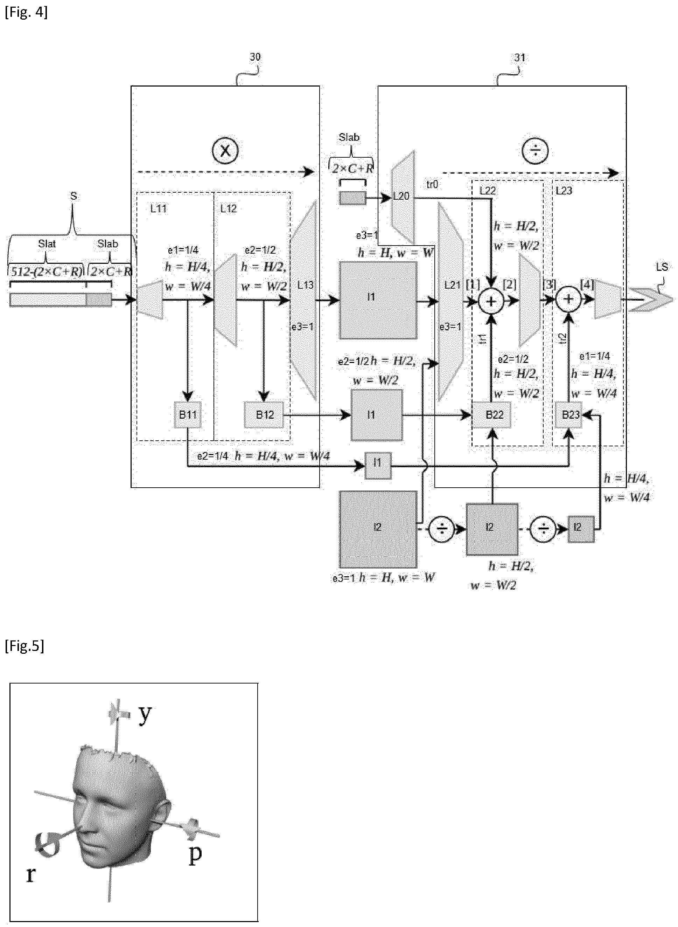

In a non-limitative embodiment, the number of primary convolution layers L1 is equal to the number of secondary convolution layers L2. Each secondary convolution layer L2 is a mirror of a primary layer L1 with regard to the dimensions of a scale e. This permits to compare real images I2 and generated images I1 two by two. In a non-limitative embodiment, the number of primary convolution layers L1 is equal to 3. As illustrated in the non-limitative embodiment of figure 4, there are three primary convolution layers L11, L12 and L13. In a non-limitative embodiment, the number of secondary convolution layers L2 is therefore also equal to 3. As illustrated in figure 4, there are three secondary convolution layers L21, L22 and L23. The generative adversarial network GAN is trained to generated high-scaled conditioned artificial images of faces I1, also called artificial images of faces I1 or artificial images I1. In a non-limitative example, six convolution layers (primary convolution layers L1 plus secondary convolution layers L2) of the GAN network lead to reaching an output image size (namely a generated image I1) of $128 \times 128$ pixels. In another non-limitative example, seven layers of the GAN network lead to reaching an output image size (namely a generated image I1) of $256 \times 256$ pixels. It is to be noted that the more convolution layers are, the more weighs w1 and weighs w2 are added, and the more computing power is needed.

A primary convolution layer L1 increases the scale e of an artificial image I1 which has been generated, compared to a previous primary convolution layer L1, whereas a secondary convolution layer L2 decreases the scale e of an artificial image I1 which has been generated, compared to a previous secondary convolution layer L2. The downscaling is illustrated in figure 4 by the sign %, whereas the scale increase is illustrated in figure 4 by the sign X.

The generative adversarial network GAN allows using multiple labels SI for the conditioning. Thanks to the multiple labels SI, the artificial images I1 reproduce realistic images of some distraction states St1 and drowsiness states St2 of a plurality of persons according to particular features such as head pose, that is to say according to particular conditions.

As illustrated in figure 1, the computer implemented method 1 comprises a step E1 illustrated F1(30, S(Slat, Slab(SI)), of configuring a generator 30 of said generative adversarial network GAN to receive an input vector S composed of a latent vector Slat and of a labels vector Slab, said labels vector Slab comprising labels SI extracted from a dataset DS2 comprising a primary number P1 of real images of faces I2 of a secondary number P2 of persons. In other words, one applies on the generator 30 of said generative adversarial network GAN an input vector S composed of a latent vector Slat and of a labels vector Slab, said labels vector Slab comprising labels SI extracted from a dataset DS2 comprising a primary number P1 of real images of faces I2 of a secondary number P2 of persons. In other words, the input vector S is applied to said generator 30.

The latent vector Slat represents a random part, whereas the labels vector Slab represents a conditional part. The conditional part Slab is concatenated with the random part Slat at the input of the generator 30. The latent vector Slat is composed of random values, whereas labels vector Slab comprises one or a plurality of labels SI, also called labels or conditions SI or conditions.

The latent vector Slat permits to obtain a diversity of artificial images I1 at the output of generator 30, that is to say artificial images I1 which are different from one another with respects to the labels SI of the labels vector Slab.

The labels vector Slab represents the conditions for generating artificial images I1 and the conditions for checking if these artificial images I1 comply with the real images I2 with respect to these conditions. The labels SI include one or a plurality of classification conditions C and/or one or a plurality of regression conditions R. In a non-limitative embodiment illustrated in figure 4, the labels vector Slab comprises two classification conditions C and one regression condition R. Hence, Slab = 2xnc +nr with nc the number of classification conditions, and nr the number of regression conditions. These classification conditions C and these regression conditions R are flexible. So, in other non-limitative examples, one may have Slab = nc + nr, or Slab = nc + 2xnr or any other combinations. In a non-limitative embodiment, the classification conditions C are the gender and accessories wearing such as in non-limitative examples glass wearing or hat wearing or beard wearing. In a non-limitative embodiment, the regression conditions R are the angles (y, p, r) of the head pose (illustrated in figure 5). The angles of the head pose are the yawl (y), the pitch (p) and the roll (r) as illustrated in figure 5. In a non-limitative embodiment, the classification conditions C are encoded as one-hot encoded vectors whereas the regression conditions R are encoded as floating values.

In a non-limitative embodiment illustrated in figure 4, the input vector S comprises a size of 512. It permits to generate an artificial image of size 256x256. Hence, Slab+Slat = 512. Hence, in the non-limitative example illustrated in figure 4, the latent vector Slat comprises a size of 512-(2xC+R). In a non-limitative examples, when the gender, the wearing of glasses and the head pose is used for the conditions, 7 values of the input vector S represent the latent vector Slab (2 values for the wearing of glasses, 2 for the gender, 1 for the yaw, 1 for the pitch, and 1 for the roll), and 505 values represent the latent vector Slat. In another non-limitative embodiment, Slat=512. The input vector S is therefore growing, but the latent vector Slat will not be reduced. This may be useful if the number of conditions increases, so that the generative adversarial network GAN may be able to create enough diversity. Hence, thanks to these classification conditions C and regression conditions R, the GAN network permits to obtain a diversity of artificial images of faces I1, which are realistic and which represent in non-limitative examples women, men, with or without glasses or any other accessories, and/or whose head pose are different etc. Hence, the artificial images I1 may be used as training data for the DMS system. Its training will be efficient as it is based on realistic images.

It is to be noted that the labels vector Slab which is input to the generator 30 comprises the same labels SI, as some real images I2 of a dataset DS2 illustrated in figure 3 and described in the following. Hence, for each real image I2, there are some different labels SI, and those labels SI are reproduced within the labels vector Slab of the generator 30. Hence, from one real image I2, the GAN network will generate a plurality of artificial images I1 with the same classification conditions C and/or the regression conditions R of the corresponding real image I2. In other words, a real image I2 permits to generate a plurality of corresponding artificial images I1.

In a non-limitative embodiment, the latent vector Slat is modified for each real images I2 of a batch Bt1 illustrated in figure 3. In a non-limitative example, the batch Bt1 comprises 20 real images I2. Hence, in a non-limitative embodiment the training of the GAN network is performed on a batch Bt1 of 20 real images I2. This means that 20 real images are processed in parallel by the GAN network. It is to be noted that the labels SI of a same batch Bt1 are all different from one real image I2 image to another real image I2.

As illustrated in figure 1, the computer implemented method 1 comprises a step E2 illustrated F2(30, I1, L1, S(Slat, Slab(SI)), of configuring said generator 30 to generate artificial images of faces I1 for a DMS system, at different scales e on each primary convolution layer L1 of which said generator 30 is composed of, based on said input vector S. In other words, one generates by means of the generator 30 artificial images of faces I1 for a DMS system, at different scales e on each primary convolution layer L1 of which said generator 30 is composed of, based on said input vector S. Hence, the generator 30 is trained to generate artificial images of faces I1 for a DMS system, at different scales e on each primary convolution layer L1 of which said generator 30 is composed of, based on said input vector S.

Each primary convolution layer L1 is configured to output an artificial image I1. Each artificial image I1 is generated at a different scale e from another primary convolution layer L1. In a non-limitative embodiment, the different scales e are multiple of 1/2. Hence, as illustrated in figure 4, a primary convolution layer L1 increases the scale e of an artificial image which has been generated by 2, compared to a previous primary convolution layer L1. In the non-limitative example of three primary convolution layers L1 illustrated in figure 4, the scale e1 related to the primary convolution layer L11 is 1/4, the scale e2 related to the primary convolution layer L12 is 1/2, and the scale e3 related to the primary convolution layer L13 is 1. Hence, the output of the primary convolution layer L11 is an artificial image I1 with a height H/4 and a width W/4, the output of the primary convolution layer L12 is an artificial image I1 with a height H/2 and a width W/2, and the output of the primary convolution layer L13 is an artificial image I1 with a height H and a width W, H and W being the targeted height and width for the artificial images I1 which will be generated by the GAN network.

The output of a primary convolution layer L1 is used as input of a secondary convolution layer L2 of the discriminator 31 described in the following. In a non-limitative example, with an input vector S of size 512, an artificial image I1 generated at the scale e3 = 1 has a size of $256 \times 256$ pixels. In another non-limitative example, an artificial image I1 generated at the scale e3 = 1 has a size of $128 \times 128$ pixels. The artificial images I1 thus generated have a high resolution. Each detail in a generated image I1 can thus clearly be distinguished.

Among the primary convolution layers L1, there is one convolution primary layer L1 which receives the input vector S. Thus, as illustrated in figure 1, the step E1 comprises a sub-step E11 (illustrated F11(30, L1, S)) of configuring a unique primary convolution layer L1 to receive said input vector S. In other words, one applies as an input said input vector S on a unique convolution layer L1. Said input vectors S in input on a unique primary convolution layer L1. In the non-limitative embodiment illustrated in figure 4, it is the primary convolution layer L11 which receives the input vector S. It is to be noted that the input vector S is a in a shape of a multidimensional tensor. The primary convolution layer L11 is the one which generates the artificial image I1 at the scale e1 =1/4. The input vector S allows the generation of artificial images I1 with respect to conditions SI which are defined in the labels vector Slab as above-described. Hence, some artificial images of faces I1 of persons in different states such as in non-limitative embodiments distraction states St1 and drowsiness states St2 can be generated. Of course, some artificial images of faces I1 of persons in a normal state St0 (awaken state and no distraction state) can also be generated. Hence, in a non-limitative embodiment, the generator 30 can generate artificial images of faces I1 for the states such as normal states St0, distraction states St1, drowsiness states St2, which will be used for the training of the DMS system to differentiate a normal state St0 from a distraction state St1 or from a drowsiness state St2 (as illustrated in figure 3). It is to be noted that there can be different normal states St0, different distraction states St1, and different drowsiness states St2. The blocks B11 & B12 illustrated in figure 4 permit to transform output tensors from the primary convolution layers L11 and L12 into artificial images I1. It is to be noted that the primary convolution layer L13 includes such a block (not illustrated).

As illustrated in figure 1, the computer implemented method 1 further comprises a step E3 (illustrated F3(31, I2, L2, S(Slat, Slab(SI)))), of configuring said discriminator 31 to receive for each secondary convolution layers L2 of which said discriminator 31 is composed of, as inputs an artificial image of a face I1 generated by said generator 30 at a different scale e from another secondary convolution layer L2, and a real image of a face I2 at the same scale e, said real image of a face I2 coming from said dataset DS2. In other words, one applies to the discriminator 31 of said GAN network for each secondary convolution layers L2 of which said discriminator 31 is composed of, as inputs an artificial image of a face I1 generated by said generator 30 at a different scale e from another secondary convolution layer L2, and a real image of a face I2 at the same scale e, said real image of a face I2 coming from said dataset DS2.

Each secondary convolution layer L2 is configured to receive an artificial image I1 from a different primary convolution layer L1. Therefore it receives an artificial image I1 at a different scale e. Each secondary convolution layer L2 is a mirror of a primary layer L1 with regard to the dimensions of the scale e. Hence, in the non-limitative example of three secondary convolution layers L2 illustrated in figure 4, the secondary convolution layer L21 receives an artificial image I1 from the primary convolution layer L13 at a scale e3=1, the secondary convolution layer L22 receives an artificial image I1 from the second primary convolution layer L12 at a scale e2=1/2, and the secondary convolution layer L23 receives an artificial image I1 from the primary convolution layer L13 at a scale e1=1/4. Hence, one input of the secondary convolution layer L21 is an artificial image I1 with a height h and a width w, one input of the secondary convolution layer L22 is an artificial image I1 with a height h/2 and a width w/2, and one input of the secondary convolution layer L23 is an artificial image I1 with a height h/4 and a width w/4.

The real image of face I2, also called real image I2, is coming from a dataset DS2 (illustrated in figure3) which comprises a primary number P1 of real images of faces I2 of a secondary number P2 of persons. In a non-limitative embodiment, the dataset DS2 of real images I2 is stored within a database B2 with related real labels SI. Said real labels SI include one or a plurality of the classification conditions C and/or one or a plurality of the regression conditions R above-described. The real labels Sl are used for the labels vector Slab which is input in the generator 30, and in the discriminator 31. In other words, the labels Sl of the labels vector Slab are chosen among the real labels Sl of the database B2 and extracted from the real images I2 of the dataset DS2. It is to be noted that the training of the GAN network is not necessary performed on all the labels Sl of the database B2, but only on those which are relevant for the DMS system. In a non-limitative embodiment, the real images I2 and the regression conditions R are following a normal distribution. It avoids the training of the GAN network to slow down and it enhances the performance of the generator 30 and the discriminator 31. As above-described, the generator 30 is fed with these labels Sl by means of the labels vector Slab. Hence, the plurality of artificial images I1 which are generated and which correspond to one real image I2, will be generated with the same labels Sl as the ones associated with the real image I2.

In non-limitative embodiment, said database B2 may be stored in a storage memory 21' of a data processing apparatus 2 described later in the following or may be stored in a memory of a distant server (not illustrated) or of another data processing apparatus (not illustrated) which is networked with said data processing apparatus 2. In this later case, the dataset DS2 is loaded once in the storage memory 21' of the data processing apparatus 2, or loaded on the fly in said storage memory 21'. In a non-limitative embodiment, the secondary number P2 of persons is less than 40. In a non-limitative variant of embodiment, the secondary number P2 is equal to 32. In a non-limitative embodiment, among the real persons used, there are 8 women. This number inferior to 40 is sufficient to have some high quality artificial images I1 with respect to some conditions Sl such as head pose, and/or glass wearing etc. One doesn't need a higher number or persons.

In a non-limitative embodiment, the primary number P1 of real images of faces I2 is at least equal to 20 000. In a non-limitative embodiment, the dataset DS2 comprises at least 500 real images per person. In a non-limitative variant of embodiment, the dataset DS2 comprises 1000 real images per person. In a non-limitative embodiment, these real images I2 are obtained from videos taken of the persons, from the 32 persons in a non-limitative example. Hence, there is a pre-processing of said videos to extract the real images I2 and to retrieve the related labels Sl from said real images I2. Such a pre-processing is well-known by the man skilled in the art and is therefore not described here.

In a non-limitative embodiment, in order to generate artificial images I1 for the DMS system, the real images I2 of the dataset DS2 are some NIR "Near InfraRed" images. It corresponds to images which are acquire by a NIR camera which is usually used by the driver monitoring systems DMS. In a non-limitative embodiment, the real images I2 of the dataset DS2 are cropped around the face so that the different elements of these faces share the same image areas, facilitating the training: for example, the eyes are mainly in the same place in all the images. In another non-limitative embodiment, the background of the real images I2 of the dataset DS2 has been darkened in order to force the GAN network to train only based from the most important information in the images, namely the face. In a non-limitative embodiment, for the real images I2 of the dataset DS2, the maximum amplitude reached by the angles y, p, r of the head pose is 30 degrees in order to obtain a more balanced training. In a non-limitative embodiment, the standard deviations are 15° for the yaw angle, 11° for the pitch angle and 10° for the roll angle in order to obtain a more balanced training. Hence, the extreme cases are not taken into account.

In a non-limitative embodiment, the artificial image of a face I1 and the real image of a face I2, which are received as inputs by said discriminator 31 are concatenated for each secondary convolution layer L2 apart from a secondary convolution layer L21 (also called first secondary convolution layer L21). The artificial images of a face I1 and the real image of a face I2 are concatenated at different scales e. It permits to gather information together and to simplify the secondary convolution layers' L2 inputs. As illustrated in the non-limitative example of figure 4, the secondary convolution layer L22 (also called second secondary convolution layer L22) receives a tensor tr1 which is a concatenation of an artificial image I1 and a real image I2 at the scale e2=1/2, the concatenation being performed by a block B22. In figure 4, the concatenation is illustrated by the sign plus. The secondary convolution layer L23 (also called third secondary convolution layer L23) receives a tensor tr2 which is a concatenation of an artificial image I1 and a real image I2 at the scale e1=1/4, the concatenation being performed by a block B23. The secondary convolution layer L21 receives an artificial image I1 and a real image I2 at the scale e3=1, as two different inputs.

As illustrated in figure 1, the computer implemented method 1 further comprises a step E4, illustrated F4(31, Slab, L20), of configuring said discriminator 31 to receive said labels vector Slab as an input on an additional secondary convolution layer L20. It permits the discriminator 31 to check if the conditions of the real image I2 are met within the artificial image I1 which has been generated. In other words, one applies as an input said labels vector Slab on an additional secondary convolution layer L20 of said discriminator 31. Said labels vector Slab is input on said secondary convolution layer L20.

Hence, there is a double checking with respect to the conditions Sl of the labels vector Slab. One for the generator 30 so that it generates an artificial image I1 which verifies these conditions Sl, and one for the discriminator 31 so that it controls that the conditions Sl are actually met within the artificial image I1 which has been generated. Thus, in a non-limitative example, if the real image I2 is the face of a woman with glasses who has a position of the head y0, p0, r0, the discriminator 31 is able to check in the generated image I1 if the face belongs to a woman with glasses and if she has the same position of the head as the real image I2. Without the input in this additional secondary convolution layer L20, this leads to have an artificial image I1 which has a head pose completely different from the corresponding real image I2 from which it has been generated. Therefore, if such an artificial image I1 is used for the training of the DMS system, this can lead to some error detection of the different states (normal states St0, distraction states St1, drowsiness states St1) of the driver and of wrong activation of security function which could put the driver in danger. The security goal would not be met.

In the non-limitative example of figure 4, the labels vector Slab received as an input of the additional secondary convolution layer L20 is 2xC+R. In a non-limitative embodiment, the output of this additional secondary convolution layer L20 is a tensor tr0 which is concatenated to the tensor tr1 and is applied as an input to the secondary convolution layer L22.

As illustrated in figure 1, the computer implemented method 1 further comprises a step E5, illustrated F5(31, LS), of configuring the discriminator 31 to output a loss function LS. In other words, one outputs a loss function LS by means of said discriminator 31. The loss function LS permits to compare an artificial image I1 received with a corresponding real image I2 at different scales e. The comparison at different scales e allows a precise checking of the artificial image I1 to see if it is realistic. In a non-limitative embodiment, the loss function is LS is a relativistic average hinge loss function implemented by Alexia Jolicoeur-Martineau.

The relativistic hinge loss function LS is composed of two terms: the first one concerns the generator 30. It aims to force the generator 30 to generate artificial images I1 looking more realistic than real images I2. The second one concerns the discriminator 31. It aims to force the discriminator 31 to classify images (generated and real) in a way that real images I1 look more realistic than generated images I2.

Hence, on has:

[Math 1]

$$LS_D^{HingeGAN} = E_{Xr \sim P}[\max(0.1 - \breve{D}(x_r)] + E_{Xf \sim Q}[\max(0.1 - \breve{D}(x_f)]$$

[Math 2]

$$LS_G^{HingeGAN} = E_{Xf \sim P}[\max(0.1 - \breve{D}(x_f)] + E_{Xr \sim Q}[\max(0.1 - \breve{D}(x_r)]$$

[Math 3]

$$\breve{D}(x_r) = C(x_r) - E_{Xf \sim Q}[C(x_f)]$$

[Math 4]

$$\breve{D}(x_f) = C(x_f) - E_{Xr \sim P}[C(x_r)]$$

With:

[Math 5]

$$LS_D^{HingeGAN}$$

the discriminator loss,

[Math 6]

$$LS_G^{HingeGAN}$$

the generator loss,

$X_r$ : the real samples, that is to say the real images I2 ;
$X_f$ : the fake samples, that is to say the artificial images I1;
C : Critic, the output of the discriminator network;

[Math 7]

$$\breve{D}$$

the relativistic average discriminator;

P : distribution of real data, that is to say of the real images I2 ;

Q : distribution of fake data, that is to say the artificial images I1.

It is to be noted that relativistic cost functions are more stable and permits to generate a better quality sample of artificial images than non-relativistic cost functions. The loss function LS is used to obtain an efficient convergence between the artificial images I1 and the real images I2 of the dataset DS2.

During the training of the GAN network, the goal is to minimize the loss function LS from the generator's 30 point of view and to maximize the loss function LS from the discriminator's 31 point of view. Indeed, when the loss function LS approaches zero, this means that the generator 30 manages to produce artificial images I1 that are realistic. On the other hand, when the loss function LS has a bigger value, this means that the discriminator 31 is more able to discriminate a generated image I1 from a real image 12 and consequently manages to detect that a generated image I1 looks wrong. In other words, the discriminator 31 is trained by maximizing the fact that the real images I2 are more realistic than the generated images I1. In contrast, the generator 30 is trained by maximizing the fact that the generated images I1 are more realistic than the real images 12.

At the beginning of the training of the GAN network, the loss function LS has a relatively big value, but as training progresses, it has a value which decreases and approaches zero: the generator 30 learns better and better to generate realistic images, that is to say to generate artificial images I1 which looks realistic and can be used by the DMS system. Hence, thanks to the loss function LS, the discriminator 31 is trained to distinguish between an artificial image I1 and a real image I2 with respects to these conditions within the labels vector Slab.

As illustrated in figure 1, the computer implemented method 1 further comprises a step E6, illustrated F6(31, w1, w2, LS), of adjusting weights w1 of said primary convolution layers L1 and weights w2 of said secondary convolution layers L2 based on said loss function LS using back propagation until a convergence of the generative adversarial network GAN is reached. In a non-limitative embodiment, the adjusting is performed using a back propagation method which is well-known by the man skilled in the art. The convergence means that the artificial images I1 are realistic and respect the labels SI of the labels vector Slab, and therefore the faces of fake persons which are generated have the same head pose, and/or wear the same accessories etc. than the faces of the real persons in the corresponding real images I2.

As illustrated in figure 1, the computer implemented method 1 further comprises a step E7, illustrated F7(31, I1, M), of applying at least one metric M on said artificial images of faces I1. In a first non-limitative embodiment, this step is executed when the convergence of the generative adversarial network GAN is reached, that is to say at the end of the training of the GAN function, when a right value of the loss function LS is attained. In a second non-limitative embodiment, this step is executed during the training, each P3 epochs reference ep in figure 3. In a non-limitative embodiment, P3 is equal to 5. In a non-limitative embodiment, one epoch referred to the number of times the GAN network has been trained with the whole dataset DS2. In a non-limitative embodiment, the GAN network is trained on 300 epochs. Hence, the GAN network is trained on 300x 20 000 of real images I2 in a non-limitative embodiment.

In non-limitative embodiment, the at least one metric M is a Frechet Inception Distance FID, or an Inception Score IS, or an Euclidian distance ED. It is to be noted that the Euclidian distance ED is applied a posteriori, that is to say when the convergence of the generative adversarial network GAN is reached. Applying at least one metric M allows the validation of the quality of a generated image I1, the validation of concordance with the real image I2, and the precise validation of the regression conditions R. The Inception Score IS validates the quality of the generated images I1 and their diversity. The Frechet Inception Distance FID validates the concordance of a generated image I1 with a real image I2. It permits to check the realism of the generated image I1, for example the classification as a man or a woman. These two first metrics M being known to those skilled in the art, they are not described in detail here. The Euclidian distance ED validates the regression conditions R. This last metric ED permits to have a more precise verification on the generated image I1. For this last metric M, one extracts some particular points on the generated image I1 and on the corresponding real image I2, and one verifies that for the regression conditions R of the generated image I1, in a non-limitative example the y, p, r angles of the head pose, these particular points are closed to the ones of the corresponding real image I2. In non-limitative embodiments, the particular points comprise at least 6 points for: the outer corners of the mouth, the outer corners of the eyes, the tip of the nose and the chin.

If said at least one metric M is not good, the computer implemented method 1 further comprises a step E8, illustrated F8(31, Pa(Pa1, Pa2, Pa3)), of adjusting different training parameters Pa to reach a minimum value of the metric(s) M.

In non-limitative embodiment, said training parameters Pa comprise:

- hyperparameters Pa1,
- a distribution Pa2 of the real images within the dataset DS2,
- parameters Pa3 related to the architecture of the GAN network.

These training parameters Pa can be taken as a sole or in combination.

In non-limitative embodiments, the hyper-parameters Pa1 are:

- the batch Bt1,
- a learning rate (not illustrated), which is a parameter for the back propagation method,
- an optimizer (not illustrated), which is another parameter for the back propagation method.

In non-limitative examples, the hyper-parameters Pa1 are:

- a batch Bt1 size of 20 images,
- a learning rate of 0.003,
- an Adam optimizer (well-known by the man skilled in the art) for the back propagation method.

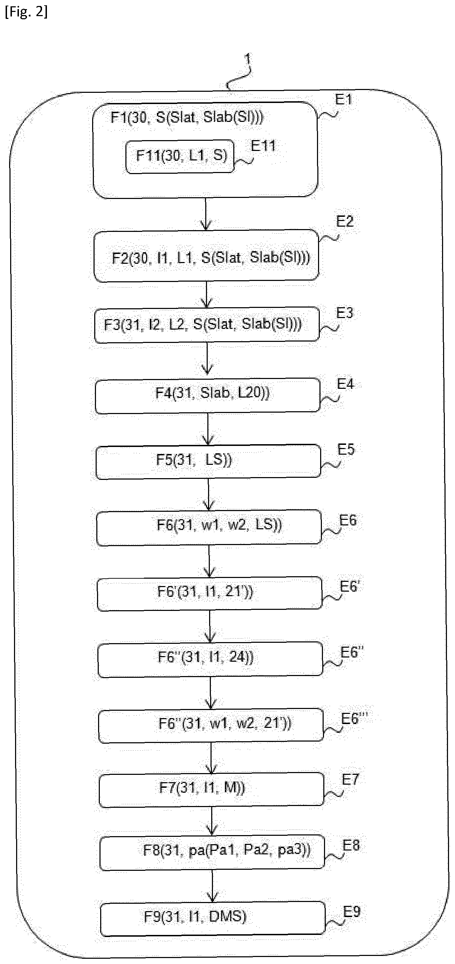

The training parameters Pa are adjusted so that a desired minimum value of the metric(s) M is attained. In a non-limitative embodiment illustrated in figure 2, the computer implemented method 1 further comprises a step E6', illustrated F6'(31, I1, 21'), of storing said artificial images of faces I1 which are generated by the generator 30 in a storage memory 21' of the data processing apparatus 2 and to display them on a human interface machine 24 (step E6" illustrated F6"(31, I1, 24)). These steps E6' and E6" permit to perform the step E6 when a metric M such as the Euclidian distance ED is applied. Moreover, these steps E6', E6" permit an operator to check the resolution of the artificial images I1 and if the artificial images I1 are enough realistic to be used for the training of the DMS system. The storing of said artificial images of faces I1 is performed an interval of epochs.

Moreover, in a non-limitative embodiment illustrated in figure 2, the computer implemented method 1 further comprises a step E6''', illustrated F6'(31, w1, w2, 21'), of storing the weights w1 of the primary convolution layers L1 and the weights w2 secondary convolution layers L2 in the same storage memory 21' or in another one. Hence, one can used the best model of the GAN network which weights w1, w2 have been stored, when its training is stopped. The storing is performed according to a chosen interval of epochs, in a non-limitative example each five epochs.

In non-limitative examples, said human interface machine 24 is a display unit, such as in non-limitative examples a LCD display (Liquid crystal display), a PDP display (plasma display panel) etc. It allows a person to check firsthand if the artificial images I1 don't degrade as the loss function LS still decreases. Indeed, it may happen that while the loss function LS decreases, the artificial images I1 are not realistic anymore. In this case, in a non-limitative embodiment, there is a retraining after a new adjustment of the training parameters Pa, or in another non-limitative embodiment, the training is stopped. Then the step E7 above-mentioned is performed on said artificial images of faces I1 which have been stored.

It is to be noted that when the artificial images I1 are of enough good resolution, and when a convergence of the GAN network is reached, and when the metric (s) M reaches a desired value, the training of the GAN network can be stopped.

In a non-limitative embodiment illustrated in figure 2, the computer implemented method 1 further comprises a step E9, illustrated F9(31, I1, DMS), of transmitting said artificial images I1 to the DMS system so that it can be trained with said artificial images I1.

One or a plurality of iterations is performed for the steps E1 to E8. They are executed again until the metric(s) M is minimized. It is to be noted that the training of the GAN network is based on a balance between the minimization of the metric(s) M, the time used for the training, and the visual aspect of the artificial image I1 which has been generated with respect to the labels SI of the labels vector Slab, that is to say if the artificial image I1 is realistic and comply with the labels SI. Although figures 1 and 2 illustrate the operations in a sequential form, the operations E1 to E9 can be executed in parallel when possible or in any other order when possible.

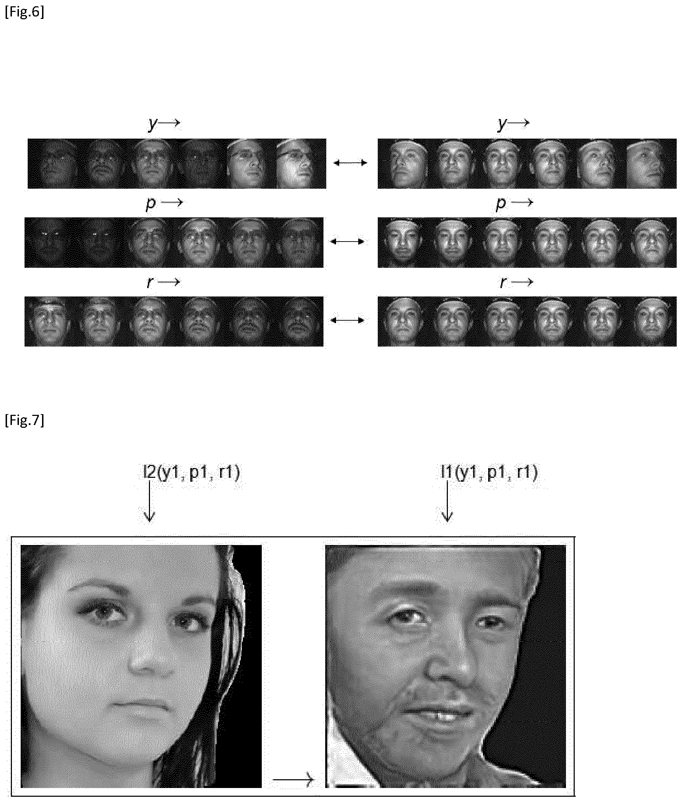

As illustrated in figure 6, the training result shows that the computer implemented method 1 manages to train the GAN network to generate as an output a series of realistic images I1 which share different head poses according to the yaw angle y, pitch angle p and roll angle r with glass wearing (the three sets of images on the left) or without (the three sets of images on the right). As can be seen, this series of realistic images can at the end form a video reproducing drowsiness states St1 or distracting states St2. Hence, from a real video of a real person, the GAN network can generate a video of a fake person.

In the non-limitative examples of figure 6, the gender has not been taken into account. The head pose labels of the real image I2 of the dataset DS2 have been used as an input of the GAN network.

Hence, thanks to the computer implemented method 1, one obtains a good training of the GAN network which leads to the generation of artificial images of faces I1 for a DMS system which reproduce in a realistic way some real images of faces with respects to the conditions within the labels vector Slab, that is to say with respect to the classification conditions C and to the regression conditions R. In a non-limitative example, one obtains some artificial images of faces I1 of 1000 different fake persons, that is to say non-real persons. These artificial images of faces I1 are training data for the DMS system. Hence, the computer implemented method 1 generates training data for the DMS system. Hence, from a low number of real persons, the computer implemented method 1 allows the generation of a higher number of fake persons.

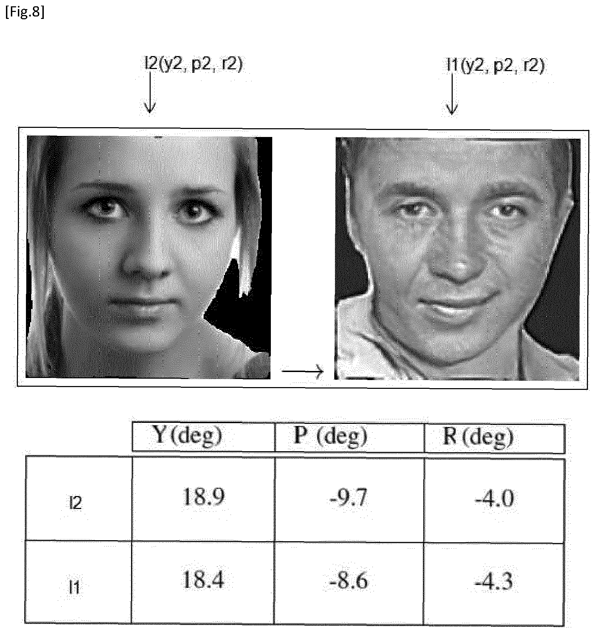

It is to be noted that one obtains the same quality of image than with a dataset AFLW of 25000 persons edited by M.Kösinger, P.Wohlart, P.M. Roth and H. Bischof "Annotated facial Landmarks in the Wild in the IEEE publication : A large scale, real-world database for facial landmark localization, 11 2011 pp 2144-2151. Hence, even with another dataset of real images I2 which comprises a number of persons which is much more greater than the secondary number P2 of persons of the dataset DS2 used, the computer implemented method 1 manages to train the GAN network to generate as an output a realistic image I1 which shares the same labels SI than the corresponding real image I2. Thus, when the dataset AFLW is used, one obtains the results illustrated in figure 7 and 8 with on the left the real image 12 of the dataset AFLW used, and on the right the artificial image I1 generated. The table illustrated in figure 8 gathers the head pose of the real image I2 and the fake image I1 of figure 8. The difference of detection between the real image I2 and the generated images I1 is only reaching a maximum of 2 degrees of angle (worse case, the yaw angle on figure 8). As the results with a much smaller dataset DS2 of real samples are the same than the results with the AFWL dataset, the computer implemented method 1 doesn't need a big amount of samples to generate realistic artificial images I1 which comply with the conditions of their corresponding real images I2. Hence, the cost for the training is reduced and the memory space needed to store the real images I2 is reduced.

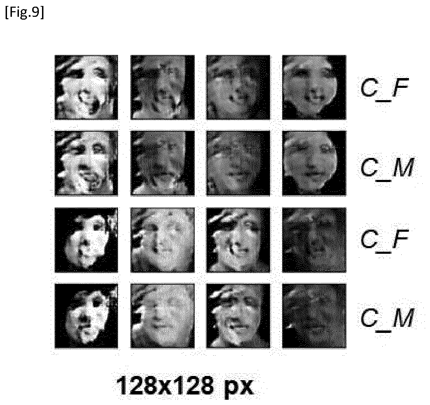

Figure 9 illustrates artificial images of size of 128x128 pixels which are generated by a common GAN network which only takes into account a unique classification condition C (woman referenced C_F or man referenced C_M in the figure) as an input of the generator 30 and no input conditions for the discriminator 31 with no verification of the generation of images at different scales e. One pixel is referenced px in the figure. As can be seen, the artificial images are not realistic as one doesn't recognize a woman C_F or a man C_M.

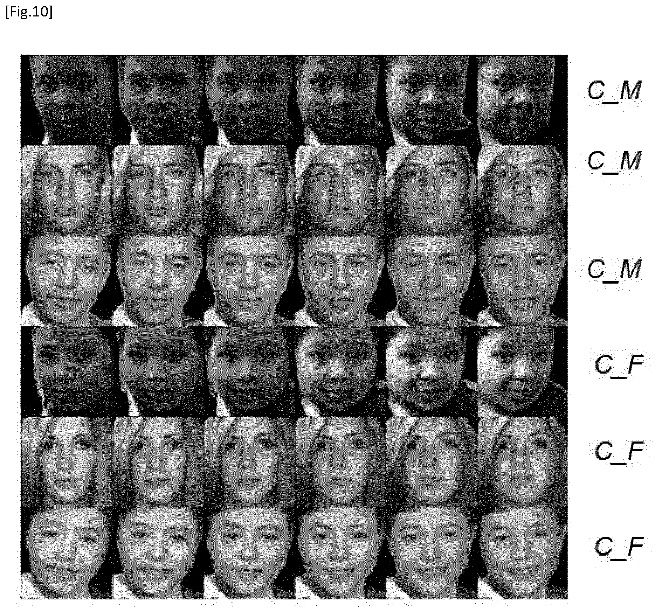

One can see that contrary to the GAN network used to generate artificial images of size of 128x128 pixels as in figure 9, that are not realistic, the computer implemented method 1 manages to train the GAN network to generate high-resolution and realistic images, as illustrated in figure 10, which can be used by the DMS system for its training. Thanks to the verification of the generated images at different scales e on the discriminator 31 side, one is sure to have realistic and high resolution images (that is to say the artificial images I1) which comply with the labels SI of the labels vector Slab. In this non-limitative example, a classification condition C such as the gender (woman referenced C_F or man referenced C_M in the figure) has been also taken into account.

Furthermore, contrary to a standard GAN network with no input conditions neither on the generator 30 and neither on the discriminator 31, the computer implemented method 1 manages to train the GAN network to generate artificial images I1 of non-real persons which respect the conditions SI of the corresponding real image 12 such as the head pose, glass wearing etc.. It is not the case for a standard GAN network where an artificial image can be generated with a head pose (for example) which is not chosen and which is not related to the real head pose of the real person in the corresponding real image I2.

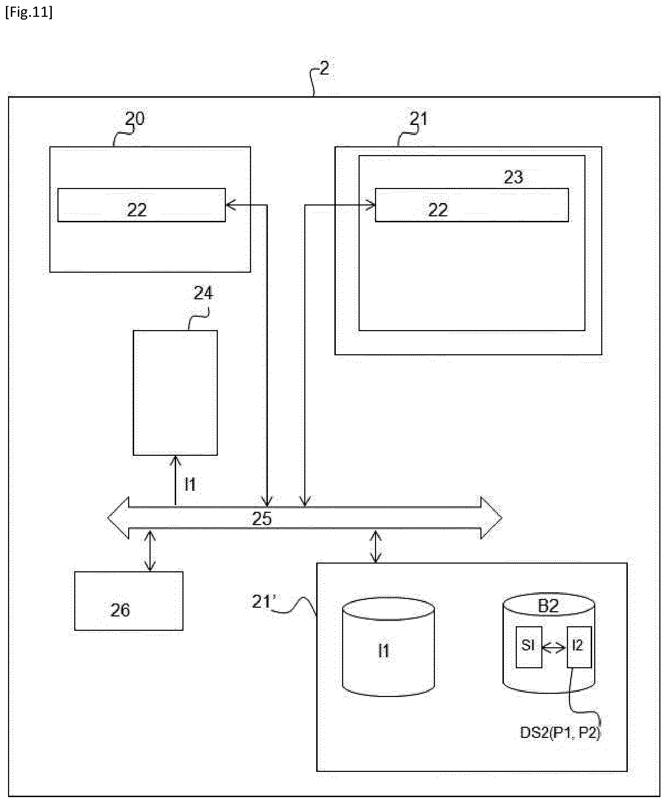

Hence, the computer implemented method 1 is implemented by a data processing apparatus 2 illustrated in figure 11. The data processing apparatus 2 comprises at least one processor 20 configured to perform the computer implemented method 1. The data processing apparatus 2 operates as a standalone device or may be coupled (e.g. networked) to other data processing apparatus.

The data processing apparatus 2 comprises at least one memory 21 which is coupled to the at least one processor 20 through a communication bus 25. The memory 21 is a non-transitory computer readable storage medium comprising instructions 22 which when executed by a computer, causes the computer to carry out the computer implemented method 1. The memory 21 also referred to as non-transitory computer readable storage medium 21, a computer readable storage medium 21, or a computer readable storage device 21. The instructions 22 are also referred to as program instructions 22. The data processing apparatus 2 further comprises a storage memory 21'. In a non-limitative embodiment, the database B2 described in the foregoing and which comprises the dataset DS2, is embodied on the storage memory 21'. However, in another non-limitative embodiment not illustrated, it can be embodied on another memory. In a non-limitative embodiment, the artificial images I1 are stored in the storage memory 21' as above-described. In non-limitative embodiments, the storage memory 21' is an erasable programmable read-only memory EPROM or the like such as EEPROM, a Flash memory etc. The data processing apparatus 2 further comprises a random access memory RAM or the like such as DRAM, SRAM. Said random access memory is referenced 26 in figure 11. Said random access memory 26 is used to load the batches Bt1 of 20 images (in the non-limitative example) to be used by the GAN network when the computer implemented method 1 is executed. The 20 images of the batches Bt1 are retrieved from the storage memory 21' from the dataset DS2 of the database B2 and are loaded in the random access memory RAM.

Hence, the data processing apparatus 2 for training a generative adversarial network GAN to generate artificial images of faces I1 for a driver monitoring system DMS, comprises:

- at least one non-transitory computer readable storage medium 21,
- instructions 22 stored on the at least one non-transitory computer readable storage medium 21,
- at least one processor 20 configured to execute said instructions 22 to perform operations comprising:
- configuring a generator 30 of said generative adversarial network GAN to receive an input vector S composed of a latent vector Slat and of a labels vector Slab, said labels vector Slab comprising labels Sl extracted from a dataset DS2 comprising a primary number P1 of real images of faces I2 of a secondary number P2 of persons,
- configuring said generator 30 to generate artificial images of faces I1 for a driver monitoring system DMS, at different scales e on each primary convolution layer L1 of which said generator 30 is composed of, based on said input vector S,
- configuring a discriminator 31 of said generative adversarial network GAN to receive for each secondary convolution layers L2 of which said discriminator 31 is composed of, as inputs an artificial image of a face I1 generated by said generator 30 at a different scale e from another secondary convolution layer L2, and a real image of a face I2 at the same scale e, said real image of a face I2 coming from said dataset DS2,
- configuring said discriminator 31 to receive said labels vector Slab as an input on an additional secondary convolution layer L20,
- configuring said discriminator 31 to output a loss function LS,
- adjusting weights w1 of said primary convolution layers L1 and weights w2 of said secondary convolution layers L2 based on said loss function LS using back propagation until a convergence of the generative adversarial network GAN is reached,
- applying at least one metric M on said artificial images of faces I1,
- adjusting training parameters Pa to reach a minimum value of the at least one metric M.

It is to be noted that while only a single data processing apparatus 2 is illustrated in figure 11, the term "data processing apparatus" shall also be taken to include a collection of data processing apparatus 2 that individually or jointly execute the instructions 22.

In non-limitative embodiments, the at least one processor 20 is a central processing unit (CPU), a graphics processing unit (GPU), a digital signal processor (DSP), an application specific integrated circuit (ASICs), a radio-frequency integrated circuits (RFICs), a reduced instruction set computing processor (RISC), a complex instruction set computing processor (CISC), or any suitable combination thereof.

In non-limitative embodiments, the instructions 22 also called program instructions 22, may be assembler instructions, instruction-set-architecture (ISA) instructions, machine instructions, microcode, firmware instructions, configuration data for integrated circuitry, or either source code, or object code written in any combination of one or more programming languages, including compiled of interpreted languages, such as procedural programming language or object-oriented programming language.

In non-limitative embodiments, the non-transitory computer readable storage medium 21 is an electronic storage device, a magnetic storage device, an optical storage device, an electromagnetic storage device, a semiconductor storage device, or any suitable combination of the foregoing. In non-limitative examples, the computer readable storage medium 21 is a read-only memory ROM or the like such as PROM, an erasable programmable read-only memory EPROM or the like such as EEPROM, a Flash memory, a solid state memory, a DVD, and the like.

While the non-transitory computer readable storage medium 21 is shown as in a non-limitative embodiment to be a single medium, the term non-transitory computer readable storage medium should be taken to include a single medium or multiple media.

A computer readable storage medium 21 as used herein, is not to be construed as being a transitory signal per se, such as a radio wave, an electromagnetic wave propagating through a waveguide or other transmission media, or an electrical signal transmitted through a wire.

Hence, the non-transitory computer readable storage medium 21 comprises instructions 22 for training a generative adversarial network GAN to generate artificial images of faces I1 for a driver monitoring system DMS, that when executed by at least one processor 20, causes the at least one processor 20 to allow:

- configuring a generator 30 of said generative adversarial network GAN to receive an input vector S composed of a latent vector Slat and of a labels vector Slab, said labels vector Slab comprising labels Sl extracted from a dataset DS2 comprising a primary number P1 of real images of faces I2 of a secondary number P2 of persons,
- configuring said generator 30 to generate artificial images of faces I1 for a driver monitoring system DMS, at different scales e on each primary convolution layer L1 of which said generator 30 is composed of, based on said input vector S,
- configuring a discriminator 31 of said generative adversarial network GAN to receive for each secondary convolution layers L2 of which said discriminator 31 is composed of, as inputs an artificial image of a face I1 generated by said generator 30 at a different scale e from another secondary convolution layer L2, and a real image of a face I2 at the same scale e, said real image of a face I2 coming from said dataset DS2,
- configuring said discriminator 31 to receive said labels vector Slab as an input on an additional secondary convolution layer L20,
- configuring said discriminator 31 to output a loss function LS,
- adjusting weights w1 of said primary convolution layers L1 and weights w2 of said secondary convolution layers L2 based on said loss function LS using back propagation until a convergence of the generative adversarial network GAN is reached,
- applying at least one metric M on said artificial images of faces I1,
- adjusting training parameters Pa to reach a minimum value of the at least one metric M.

The data processing apparatus 2 comprises a computer program product 23, comprising instructions 22, which when executed by a computer, causes the computer to carry out the computer implemented method 1. Hence, as illustrated in figure 11, the computer program product 23 is embodied on the non-transitory computer readable storage medium 21 having instructions 22 stored therein. The computer program product 23 also referred to as a program, software, software application, or code. A computer program product 23 can be deployed in any form, including, but not limited to, as a stand-alone program, or as a module, component, subroutine, or other unit suitable for use in a computing environment.

Hence, the computer program product 23, comprises program instructions 22 stored in a non-transitory computer readable storage medium 21, the program instructions 22 executable by a computer to cause the computer to perform the computer implemented method 1 for training a generative adversarial network GAN to generate artificial images of faces I1 for a driver monitoring system DMS, comprising:

- configuring a generator 30 of said generative adversarial network GAN to receive an input vector S composed of a latent vector Slat and of a labels vector Slab, said labels vector Slab comprising labels Sl extracted from a dataset DS2 comprising a primary number P1 of real images of faces I2 of a secondary number P2 of persons,
- configuring said generator 30 to generate artificial images of faces I1 for a driver monitoring system DMS, at different scales e on each primary convolution layer L1 of which said generator 30 is composed of, based on said input vector S,
- configuring a discriminator 31 of said generative adversarial network GAN to receive for each secondary convolution layers L2 of which said discriminator 31 is composed of, as inputs an artificial image of a face I1 generated by said generator 30 at a different scale e from another secondary convolution layer L2, and a real image of a face I2 at the same scale e, said real image of a face I2 coming from said dataset DS2,
- configuring said discriminator 31 to receive said labels vector Slab as an input on an additional secondary convolution layer L20,
- configuring said discriminator 31 to output a loss function LS,
- adjusting weights w1 of said primary convolution layers L1 and weights w2 of said secondary convolution layers L2 based on said loss function LS using back propagation until a convergence of the generative adversarial network GAN is reached,
- applying at least one metric M on said artificial images of faces I1,
- adjusting training parameters Pa to reach a minimum value of at least one metric M.

It is to be noted that the data processing apparatus 2 that trains the GAN network is the same that implements the GAN network.

Hence, the data processing apparatus 2 for implementing a generative adversarial network GAN to generate artificial images of faces I1 for a driver monitoring system DMS, comprises:

- at least one non-transitory computer readable storage medium 21,
- instructions 22 stored on the at least one non-transitory computer readable storage medium 21,
- at least one processor 20 configured to execute said instructions 22 to perform operations comprising:
- configuring a generator 30 of said generative adversarial network GAN to receive an input vector S composed of a latent vector Slat and of a labels vector Slab, said labels vector Slab comprising labels Sl extracted from a dataset

DS2 comprising a primary number P1 of real images of faces I2 of a secondary number P2 of persons,
- configuring said generator 30 to generate artificial images of faces I1 for a driver monitoring system DMS, at different scales e on each primary convolution layer L1 of which said generator 30 is composed of, based on said input vector S,
- configuring a discriminator 31 of said generative adversarial network GAN to receive for each secondary convolution layers L2 of which said discriminator 31 is composed of, as inputs an artificial image of a face I1 generated by said generator 30 at a different scale e from another secondary convolution layer L2, and a real image of a face I2 at the same scale e, said real image of a face I2 coming from said dataset DS2,
- configuring said discriminator 31 to receive said labels vector Slab as an input on an additional secondary convolution layer L20,
- configuring said discriminator 31 to output a loss function LS.

When the training of the GAN network is stopped, there is not anymore adjustment of weights w1, w2 or of the training parameters Pa. The weights w1, w2 don't evolved anymore, the training parameters Pa are stable, the loss function LS is stabilized, and the metric(s) have reach a desired minimum value. One can use the GAN network to generate artificial images I1 for the training of the DMS system.

It is to be noted that in another non-limitative embodiment, one can use the GAN network to generate artificial images I1 for the training of the DMS system even during the training of the GAN network.

It is to be understood that the present invention is not limited to the aforementioned embodiments and variations and modifications may be made without departing from the scope of the invention. In the respect, the following remarks are made. The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof. Hence, in another non-limitative embodiment, a classification condition C may be to be bald or not. In another non-limitative embodiment, a regression condition R may be the blink rate. Hence, as above mentioned, the GAN network is trained to generate artificial images I1 of faces of different persons which are realistic for a driver monitoring system DMS to use them to recognize different states of a driver such as drowsiness states or distraction states. In non-limitative embodiments, regression conditions R further comprise the eye gaze. In another non-limitative application, the GAN network may be trained to generate artificial images I1 of text for text recognition, or to generate artificial images I1 of voice recording for speech recognition. Hence, in other non-limitative embodiments, the primary layers L1 and the secondary layers L2 are fully-connected layers, flatten layers, drop-out layers, pulling layers or any combinations thereof.

Hence, some embodiments of the invention may comprise one or a plurality of the following advantages:

- it allows the generation of training data for a driver monitoring system DMS which reproduce normal states St0, distraction states St1, and drowsiness states St2, which are realistic and of high-resolution quality so that the training of the driver monitoring system DMS will be efficient,
- it allows the checking of the artificial image I1 on a realistic point of view and on a quantitative point of view thanks to the metrics M,
- thanks to the condition as input of the discriminator 31, it permits to verify if an artificial image I1 which has been generated with respect to certain conditions are similar to the corresponding real image I2 with the same conditions,
- there is no need of a huge database of real samples (real images I2 of faces of real persons) to train the GAN network; hence it reduces the training cost and the memory storage,
- there is no need of a huge database of real samples (real images I2 of faces of real persons) to train the driver monitoring system DMS, as the GAN network will provide sufficient artificial samples (artificial images I1 of faces of fake persons); hence it reduces the training cost and the memory storage,
- it allows the generation of artificial samples (artificial images I1 of faces of fake persons) with respect to any conditions.

## Claims

1. A computer implemented method (1) for training a generative adversarial network (GAN) to generate artificial images of faces (I1) for a driver monitoring system (DMS), said computer implemented method (1) comprising:

   - configuring a generator (30) of said generative adversarial network (GAN) to receive an input vector (S)

composed of a latent vector (Slat) and of a labels vector (Slab), said labels vector (Slab) comprising labels (SI) extracted from a dataset (DS2) comprising a primary number (P1) of real images of faces (I2) of a secondary number (P2) of persons,

- configuring said generator (30) to generate artificial images of faces (I1) for a driver monitoring system (DMS), at different scales (e) on each primary layer (L1) of which said generator (30) is composed of, based on said input vector (S),
- configuring a discriminator (31) of said generative adversarial network (GAN) to receive for each secondary layers (L2) of which said discriminator (31) is composed of, as inputs an artificial image of a face (I1) generated by said generator (30) at a different scale (e) from another secondary layer (L2), and a real image of a face (I2) at the same scale (e), said real image of a face (I2) coming from said dataset (DS2),
- configuring said discriminator (31) to receive said labels vector (Slab) as an input on an additional secondary layer (L20),
- configuring said discriminator (31) to output a loss function (LS),
- adjusting weights (w1) of said primary layers (L1) and weights (w2) of said secondary layers (L2) based on said loss function (LS) using back propagation until a convergence of the generative adversarial network (GAN) is reached,
- applying at least one metric (M) on said artificial images of faces (I1),
- adjusting training parameters (Pa) to reach a minimum value of the at least one metric (M).

2. Computer implemented method (1) according to claim 1, wherein said artificial images of faces (I1) which are generated by the generator (30), reproduce some distraction states (St1) and drowsiness states (St2) of a plurality of persons with respect to the labels vector (Slab).

3. Computer implemented method (1) according to any preceding claims, wherein said primary layers (L1) and said secondary layers (L2) are convolution layers.

4. Computer implemented method (1) according to any preceding claims, wherein the configuration of said generator (30) comprises the configuration of a unique primary layer (L11) to receive said input vector (S).

5. Computer implemented method (1) according to any preceding claims, wherein the artificial images of a face (I1) and the real image of a face (12), which are received as inputs by said discriminator (31) are concatenated for each secondary layer (L2) apart from an additional secondary layer (L20).

6. Computer implemented method (1) according to any preceding claims, wherein the secondary number (P2) of persons (P) is less than 40.

7. Computer implemented method (1) according to any preceding claims, wherein the primary number (P1) of real images of faces (12) at least equal to 20 000.

8. Computer implemented method (1) according to any preceding claims, wherein the different scales (e) are a multiple of 1/2.

9. Computer implemented method (1) according to any preceding claims, wherein said labels vector (Slab) comprise one or a plurality of classification conditions (C) and/or one or a plurality of regression conditions (R).

10. Computer implemented method (1) according to the preceding claim, wherein said labels vector (Slab) comprises two classification conditions (C) and one regression condition (R).

11. Computer implemented method (1) according to any of the preceding claim 9 or 10, wherein the classification conditions (C) are the gender, accessories wearing.

12. Computer implemented method (1) according to the any of the preceding claim 9 or 10, wherein the regression conditions (R) are the angles (y, p, r) of the head pose.

13. Computer implemented method (1) according to any preceding claims, wherein the loss function (LS) is a relativistic average loss function.

14. Computer implemented method (1) according to any preceding claims, wherein the at least one metric (M) is a Frechet Inception Distance (FID), or an Inception Score (IS), or an Euclidian distance (ED).

15. Computer implemented method (1) according to any preceding claims, wherein the number of primary layers (L1) within said generator (30) is equal to the number of secondary layers (L2) within said discriminator (31).

[151] Computer implemented method (1) according to any preceding claims, wherein said training parameters (Pa) comprise:

- hyperparameters (Pa1),
- a distribution (Pa2) of the real images within said dataset (DS2),
- parameters (Pa3) related to the architecture of the generative adversarial network (GAN).

16. Computer implemented method (1) according to any preceding claims, wherein the labels (SI) of the labels vector (Slab) are chosen among real labels related to the real images (I2) of said dataset (DS2).

17. A data processing apparatus (2) comprising at least one processor (20) configured to perform the computer implemented method (1) according to any one of the preceding claims.

18. A computer program product (23), comprising instructions (22), which when the computer program product (23) is executed by a computer, causes the computer to carry out the computer implemented method (1) according to any one of the preceding claims.

19. A non-transitory computer readable storage medium (21) comprising instructions (22), which when executed by a computer, causes the computer to carry out the computer implemented method (1) according to any one of the preceding claims.

20. A data processing apparatus (2) for implementing a generative adversarial network (GAN) to generate artificial images of faces (I1) for a driver monitoring system (DMS), comprising:

- at least one non-transitory computer readable storage medium (21),
- instructions (22) stored on the at least one non-transitory computer readable storage medium (21),
- at least one processor (20) configured to execute said instructions (22) to perform operations comprising:
- configuring a generator (30) of said generative adversarial network (GAN) to receive an input vector (S) composed of a latent vector (Slat) and of a labels vector (Slab), said labels vector (Slab) comprising labels (SI) extracted from a dataset (DS2) comprising a primary number (P1) of real images of faces (I2) of a secondary number (P2) of persons,
- configuring said generator (30) to generate artificial images of faces (I1) for a driver monitoring system (DMS), at different scales (e) on each primary layer (L1) of which said generator (30) is composed of, based on said input vector (S),
- configuring a discriminator (31) of said generative adversarial network (GAN) to receive for each secondary layers (L2) of which said discriminator (31) is composed of, as inputs an artificial image of a face (I1) generated by said generator (30) at a different scale (e) from another secondary layer (L2), and a real image of a face (I2) at the same scale (e), said real image of a face (I2) coming from said dataset (DS2),
- configuring said discriminator (31) to receive said labels vector (Slab) as an input on an additional secondary layer (L20),
- configuring said discriminator (31) to output a loss function (LS).

[Fig. 1]

[Fig. 2]

[Fig. 3]

[Fig. 4]

[Fig.5]

[Fig.6]

[Fig.7]

[Fig.8]

I2(y2, p2, r2)　　　　　　　　　　　　　　　　　I1(y2, p2, r2)

| | Y (deg) | P (deg) | R (deg) |
|---|---|---|---|
| I2 | 18.9 | -9.7 | -4.0 |
| I1 | 18.4 | -8.6 | -4.3 |

[Fig.9]

C_F

C_M

C_F

C_M

128x128 px

[Fig.10]

[Fig.11]

Europäisches
Patentamt

European
Patent Office

Office européen
des brevets

# EUROPEAN SEARCH REPORT

Application Number

EP 20 19 5341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AKSHAY RANGESH ET AL: "Driver Gaze Estimation in the Real World: Overcoming the Eyeglass Challenge", ARXIV.ORG, CORNELL UNIVERSITY LIBRARY, 201 OLIN LIBRARY CORNELL UNIVERSITY ITHACA, NY 14853, 27 May 2020 (2020-05-27), XP081660526, * the whole document * | 1-20 | INV. G06N3/04 G06N3/08 G06K9/00 |
| X | LAI YING-HSIU ET AL: "Emotion-Preserving Representation Learning via Generative Adversarial Network for Multi-View Facial Expression Recognition", 2018 13TH IEEE INTERNATIONAL CONFERENCE ON AUTOMATIC FACE & GESTURE RECOGNITION (FG 2018), IEEE, 15 May 2018 (2018-05-15), pages 263-270, XP033354708, DOI: 10.1109/FG.2018.00046 [retrieved on 2018-06-05] | 1,17-20 | |
| A | * the whole document * | 2-16 | TECHNICAL FIELDS SEARCHED (IPC) |
| X | DENG JIA ET AL: "cGAN Based Facial Expression Recognition for Human-Robot Interaction", IEEE ACCESS, vol. 7, 28 January 2019 (2019-01-28), pages 9848-9859, XP011707165, DOI: 10.1109/ACCESS.2019.2891668 [retrieved on 2019-01-28] | 1,17-20 | G06N G06K |
| A | * the whole document * | 2-16 | |

-/--

The present search report has been drawn up for all claims

| Place of search | Date of completion of the search | Examiner |
|---|---|---|
| Munich | 12 March 2021 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 20 19 5341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YANCHAO DONG ET AL: "Driver Inattention Monitoring System for Intelligent Vehicles: A Review", IEEE TRANSACTIONS ON INTELLIGENT TRANSPORTATION SYSTEMS, IEEE, PISCATAWAY, NJ, USA, vol. 12, no. 2, 1 June 2011 (2011-06-01), pages 596-614, XP011325846, ISSN: 1524-9050, DOI: 10.1109/TITS.2010.2092770 * the whole document * ----- | 1-20 | |

TECHNICAL FIELDS
SEARCHED     (IPC)

The present search report has been drawn up for all claims

| Place of search | Date of completion of the search | Examiner |
|---|---|---|
| Munich | 12 March 2021 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Wild in the IEEE publication : A large scale, real-world database for facial landmark localization. Annoted facial Landmarks. 2011, vol. 11, 2144-2151